# EUROPEAN PATENT SPECIFICATION

(11) **EP 3 534 612 B1**
(45) Date of publication and mention of the grant of the patent: **25.08.2021**
(21) Application number: 17865739.1
(22) Date of filing: 18.10.2017
(51) Int. Cl.: H04N 21/236, G09G 5/00, H04N 19/70, H04N 21/4728, H04N 21/6587

(54) **TRANSMISSION APPARATUS, TRANSMISSION METHOD, RECEPTION APPARATUS, AND RECEPTION METHOD**
SENDEVORRICHTUNG, SENDEVERFAHREN, EMPFANGSVORRICHTUNG UND EMPFANGSVERFAHREN
APPAREIL DE TRANSMISSION, PROCÉDÉ DE TRANSMISSION, APPAREIL DE RÉCEPTION ET PROCÉDÉ DE RÉCEPTION

(30) Priority: 26.10.2016 JP 2016209777
(43) Date of publication of application: 04.09.2019
(73) Proprietor: Sony Group Corporation, Tokyo 108-0075 (JP)
(72) Inventor: TSUKAGOSHI, Ikuo, Tokyo 108-0075 (JP)
(74) Representative: 2SPL Patentanwälte PartG mbB
(86) International application number: PCT/JP2017/037765
(87) International publication number: WO 2018/079389

(56) References cited:
- WO-A1-2015/126144
- WO-A1-2016/056411
- WO-A1-2016/056411
- WO-A1-2018/079388
- JP-A- 2013 255 210

## Description

### [Technical Field]

The present technology relates to a transmission apparatus, a transmission method, a reception apparatus, and a reception method. More particularly, the technology relates to a transmission apparatus that obtains a video stream by coding video data of a wide view angle picture and transmits the video stream thus acquired.

### [Background Art]

The wide view angle picture is captured by use of mirrors and lenses that support wide view angles. For example, PTL 1 includes references to omnidirectional pictures being regarded as wide view angle pictures.

In the case where the video data of a wide view angle picture is transmitted, the portion of the picture targeted for display varies with the manner in which the data is converted for display on the receiving side. As a result, where a fixed portion in the wide view angle picture is desired to be displayed consistently on the side of the receiver, there has yet to be a method for enabling such display. In some examples, information about a selected zoom area of a video may be transmitted to a receiver such that the receiver can reproduce the zoom area of the video (see PTL 2).

### [Citation List]

### [Patent Literature]

[PTL 1] Japanese Patent Laid-Open No. 2009-200939
[PTL 2] WO 2016/056411 A1

### [Summary]

### [Technical Problem]

An object of the present technology is to enable the transmitting side to control the display area in the wide view angle picture being displayed on the receiving side.

### [Solution to Problem]

According to one concept of the present technology, there is provided a transmission apparatus including a transmission section configured to transmit a container in a predetermined format including a video stream obtained by coding video data of a wide view angle picture, and an information insertion section configured to insert a first SEI message including information regarding a command for controlling a display area in the wide view angle picture into the video stream, wherein the information insertion section is further configured to insert a separate second SEI message including information regarding a target point set in the wide view angle picture into the video stream, wherein the information regarding the target point includes information regarding a relative ellipse radius drawn from a reference point set in an elliptical active picture area in a rectangular area of the wide view angle picture and regarding an angle of the radius with respect to a horizontal axis, and wherein the command controls selection of the target point that determines the display area.

According to the present technology, the transmission section is configured to transmit the container in a predetermined format including the video stream obtained by coding the video data of the wide view angle picture. The information insertion section is configured to insert into the video stream the information regarding the command for controlling the display area in the wide view angle picture. For example, the information insertion section may insert the information regarding the command either in a manner corresponding to the coded data of all pictures or in a manner corresponding to the coded data of only a leading picture of a GOP.

In another example, the command may designate a specific area in the wide view angle picture as the display area. In a further example, the command may cause multiple areas in the wide view angle picture to be presented as candidates for selection of the display area. In this case, one of the multiple areas in the wide view angle picture may be designated as a default display area.

Thus, according to the present technology, the information regarding the command for controlling the display area in the wide angle view picture is transmitted in a manner inserted into the video stream obtained by coding the video data of the wide view angle picture. This enables the transmitting side to control the display area in the wide view angle picture on the receiving side.

According to another concept of the present technology, there is provided a reception apparatus including a reception section configured to receive a container in a predetermined format including a video stream obtained by coding video data of a wide view angle picture. A first SEI message including information regarding a command for controlling a display area in the wide view angle picture is inserted in the video stream. Further, a separate second SEI message including information regarding a target point set in the wide view angle picture is inserted in the video stream, wherein the information regarding the target point includes information regarding a relative ellipse radius drawn from a reference point set in an elliptical active picture area in a rectangular area of the wide view angle picture and regarding an angle of the radius with respect to a horizontal axis. The reception apparatus further includes a processing section configured to process the video data of the wide view angle picture obtained by decoding the video stream on a basis of the information regarding the command so as to obtain display picture data, wherein the command controls selection of the target point that determines the display area.

According to the present technology, the reception section is configured to receive the container in a predetermined format including the video stream obtained by coding the video data of the wide view angle picture. The information regarding the command for controlling the display area in the wide view angle picture is inserted in the video stream. The processing section is configured to process the video data of the wide view angle picture obtained by decoding the video stream on the basis of the information regarding the command so as to obtain the display picture data.

Thus, according to the present technology, the display picture data is obtained by processing the video data of the wide view angle picture obtained by decoding the video stream on the basis of the information regarding the command for controlling the display area in the wide view angle picture. This causes the display area in the wide view angle picture to appear as intended by the transmitting side.

For example, according to the present technology, the command may cause multiple areas in the wide view angle picture to be presented as candidates for selection of the display area. A display control section is further provided to display a user interface screen for selecting any one of the multiple areas. The processing section may be configured to obtain the display picture data of the area selected on the basis of the user interface screen. This allows the user to easily select the display area.

### [Advantageous Effects of Invention]

The present technology enables the transmitting side to control the display area in the wide view angle picture being displayed on the receiving side. It is to be noted that the advantageous effects outlined above are not limitative of the present disclosure. Further advantages will become apparent from a reading of this disclosure.

### [Brief Description of Drawings]

[FIG. 1]

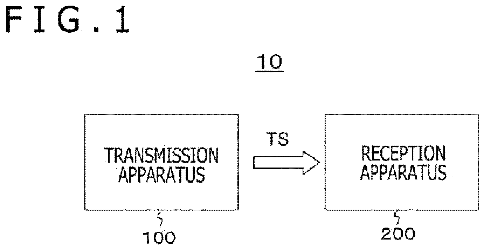

   FIG. 1 is a block diagram depicting a typical configuration of a transmission/reception system as one embodiment of the present technology.
[FIG. 2]

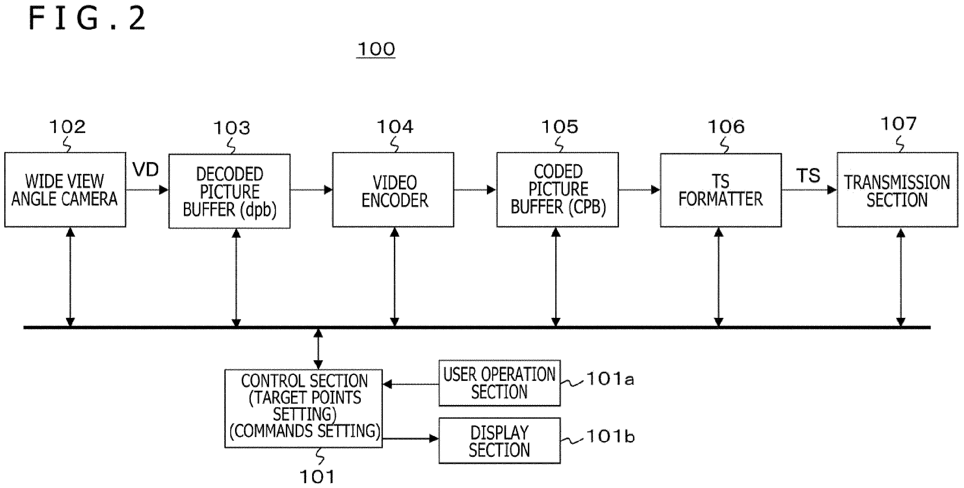

   FIG. 2 is a block diagram depicting a typical configuration of a transmission apparatus.
[FIG. 3]

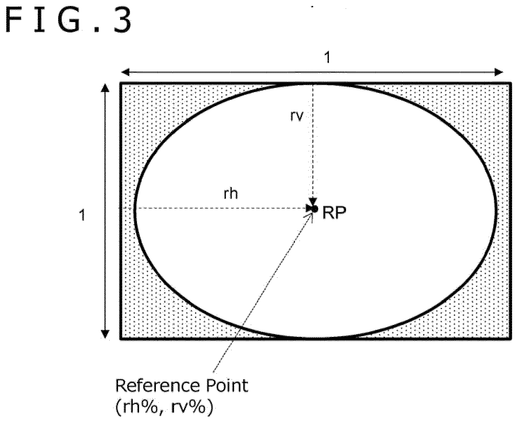

   FIG. 3 is a schematic diagram explaining information regarding a reference point (RP) set in an elliptical active picture area in a rectangular area of a wide view angle picture.
[FIG. 4]

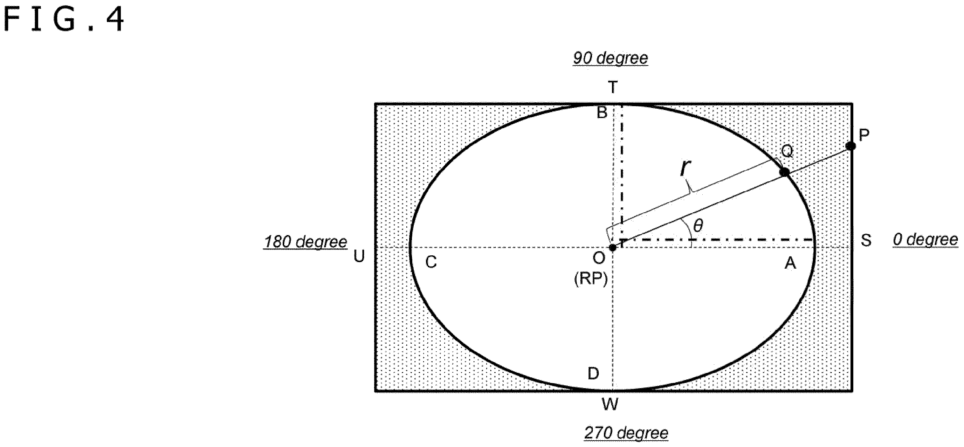

   FIG. 4 is a schematic diagram explaining information regarding the elliptical active picture area in the rectangular area of the wide view angle picture.
[FIG. 5]

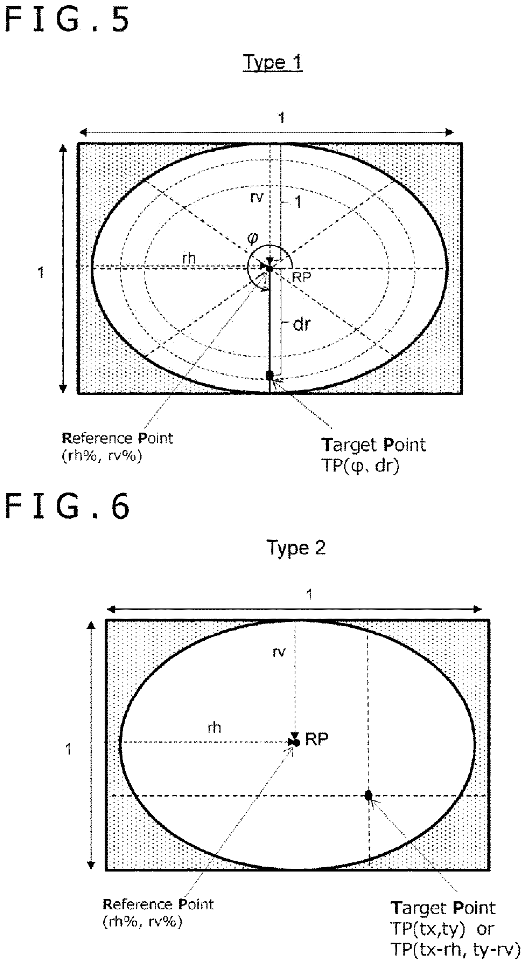

   FIG. 5 is a schematic diagram explaining information (type 1) regarding a target point (Tp) set in the wide view angle picture.
[FIG. 6]
   FIG. 6 is a schematic diagram explaining information (type 2) regarding another target point (Tp) set in the wide view angle picture.
[FIG. 7]

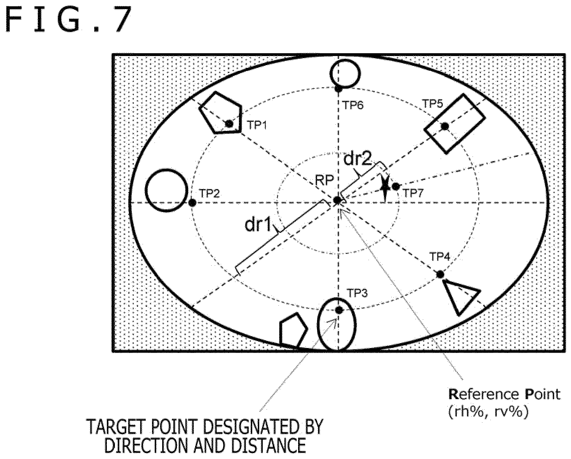

   FIG. 7 is a schematic diagram depicting an example of target points (TP) being set in the wide view angle picture.
[FIG. 8]

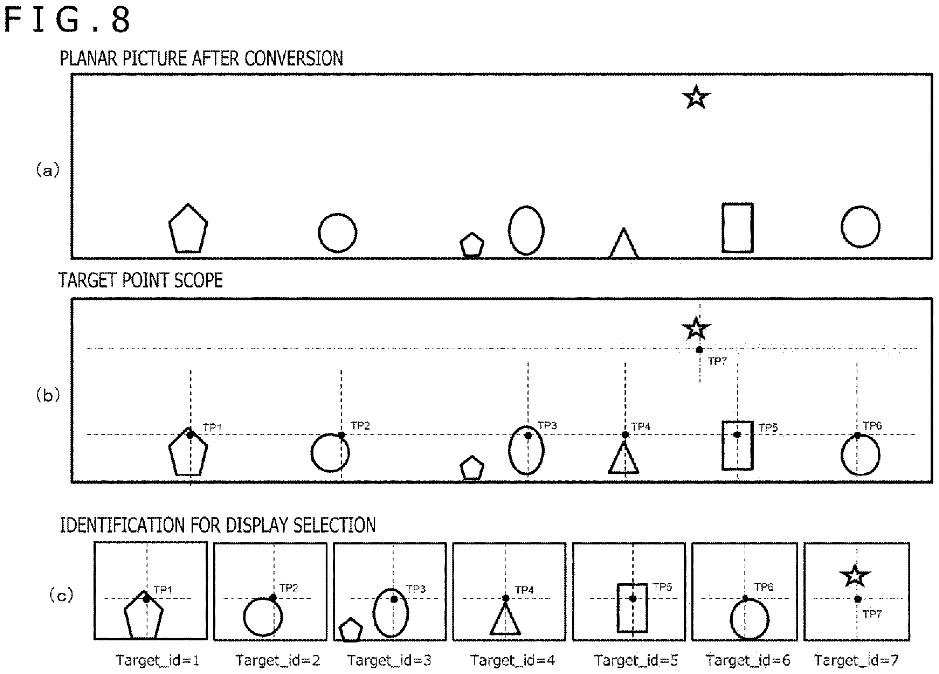

   FIG. 8 depicts schematic diagrams explaining processes performed by the receiving side in the case where the information regarding the target points (TP) set in the wide view angle picture is inserted into a video stream obtained by coding the video data of the wide view angle picture.
[FIG. 9]

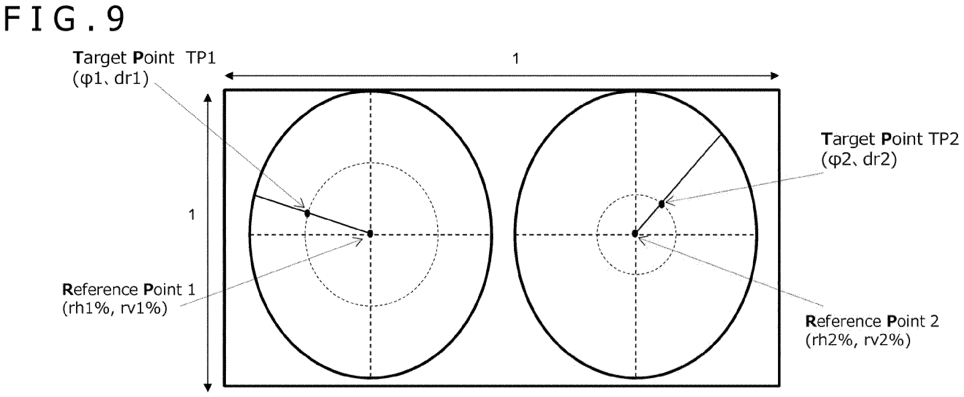

   FIG. 9 is a schematic diagram explaining an example where two elliptical active picture areas exist in the rectangular area of the wide view angle picture and where target points (TP) are designated by the type 1 information.
[FIG. 10]

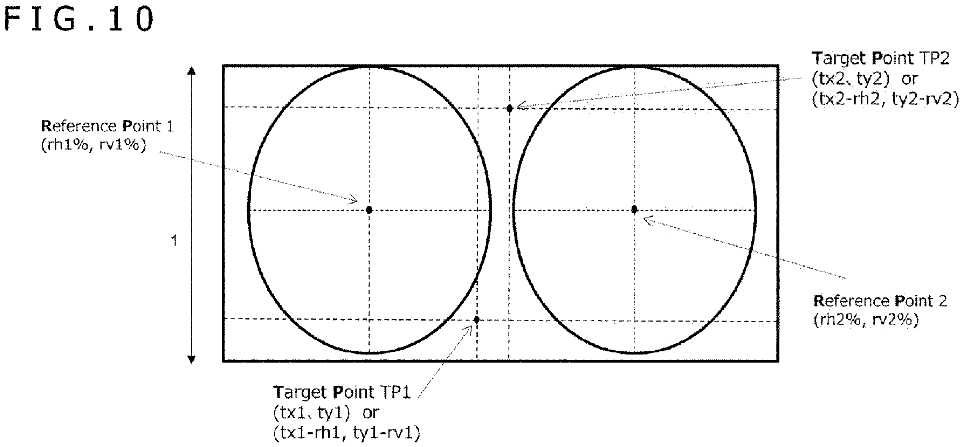

   FIG. 10 is a schematic diagram explaining an example where two elliptical active picture areas exist in the rectangular area of the wide view angle picture and where target points (TP) are designated by the type 2 information.
[FIG. 11]

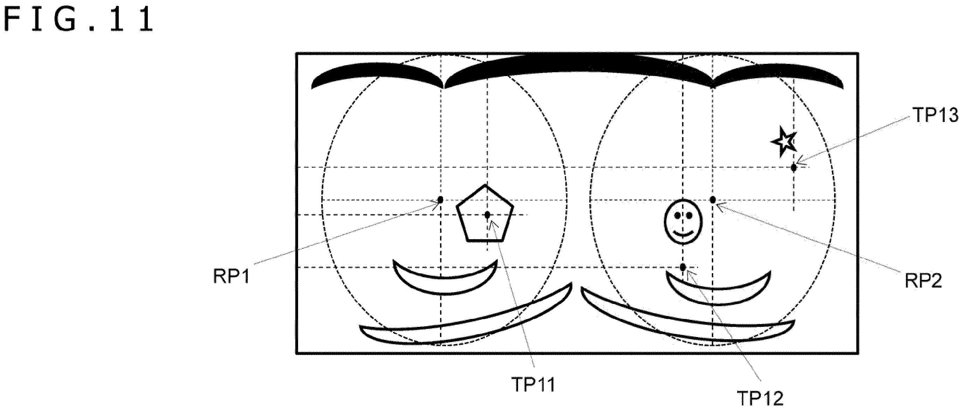

   FIG. 11 is a schematic diagram depicting an example of target points (TP) being set in the wide view angle picture.
[FIG. 12]

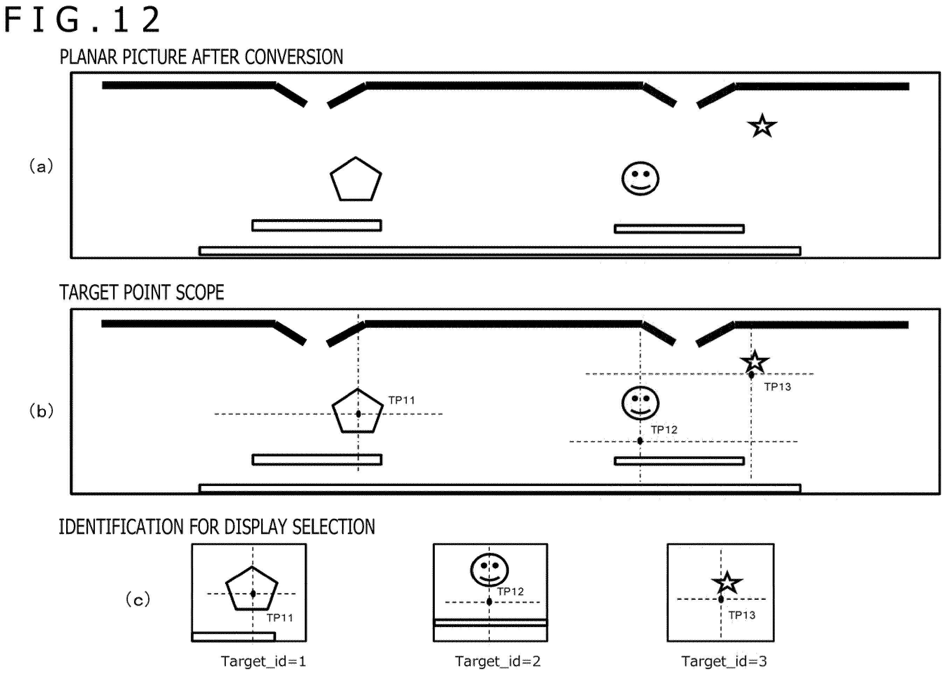

   FIG. 12 depicts schematic diagrams explaining processes performed by the receiving side in the case where the information regarding the target points (TP) set in the wide view angle picture is inserted into the video stream obtained by coding the video data of the wide view angle picture.
[FIG. 13]

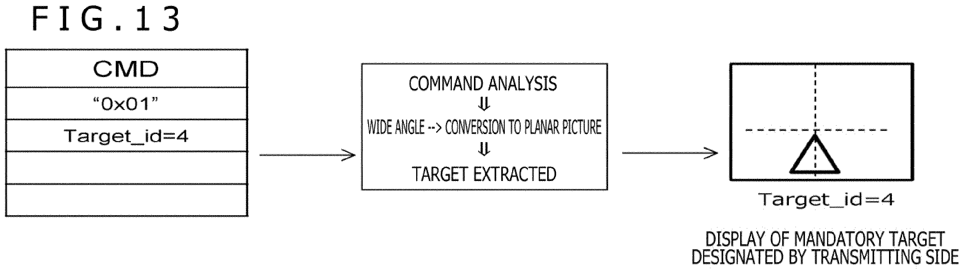

   FIG. 13 is a schematic diagram explaining a command of which the command type is "0×01."
[FIG. 14]

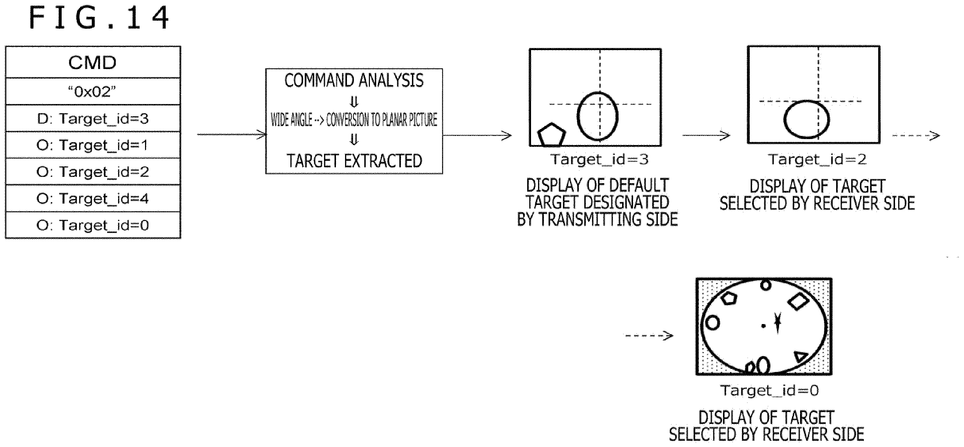

   FIG. 14 is a schematic diagram explaining a command of which the command type is "0×02."
[FIG. 15]

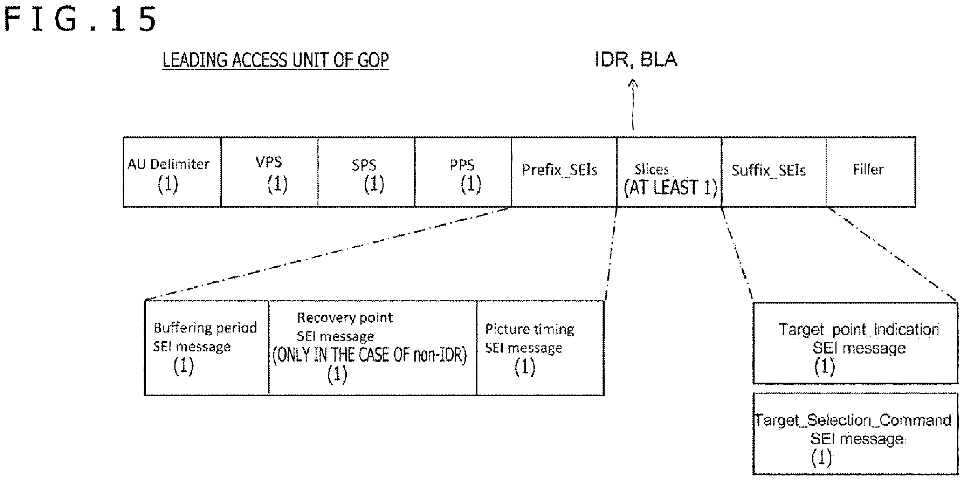

   FIG. 15 is a schematic diagram depicting a leading access unit of a GOP in the case where the coding method is HEVC.
[FIG. 16]

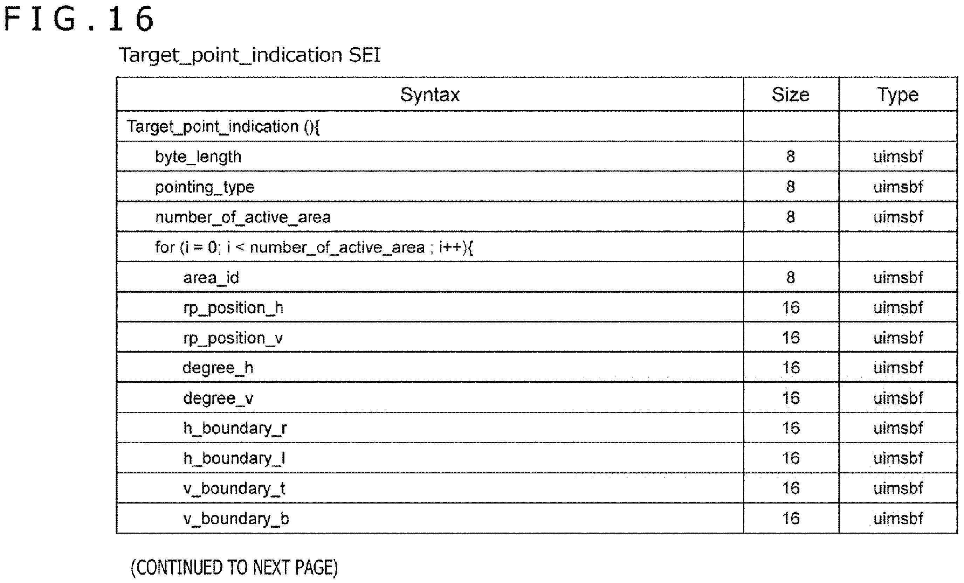

   FIG. 16 is a tabular diagram (1/2) depicting a structural example of a target point indication SEI message.
[FIG. 17]

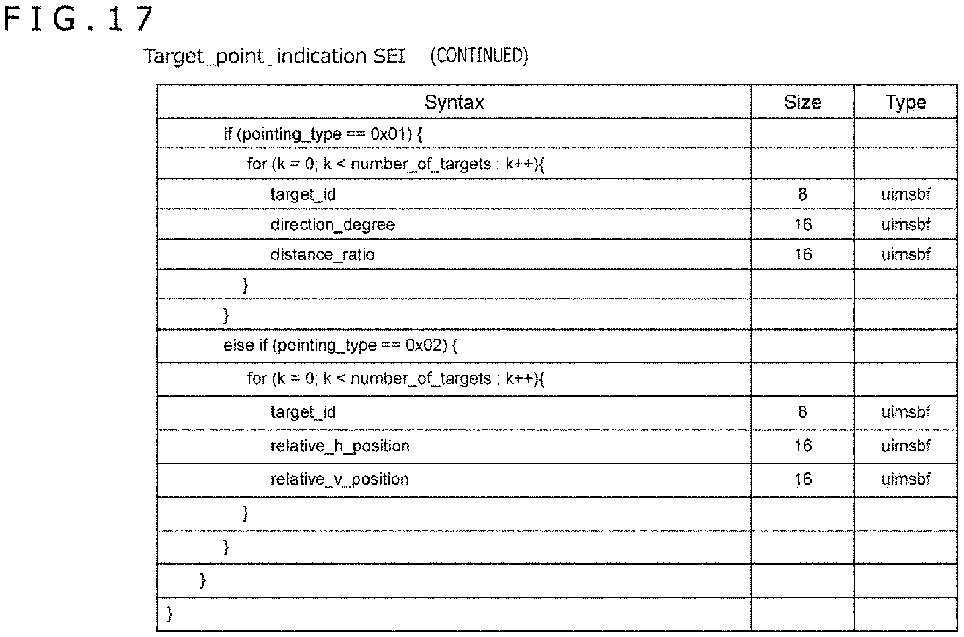

   FIG. 17 is another tabular diagram (2/2) depicting the structural example of the target point indication SEI message.
[FIG. 18]

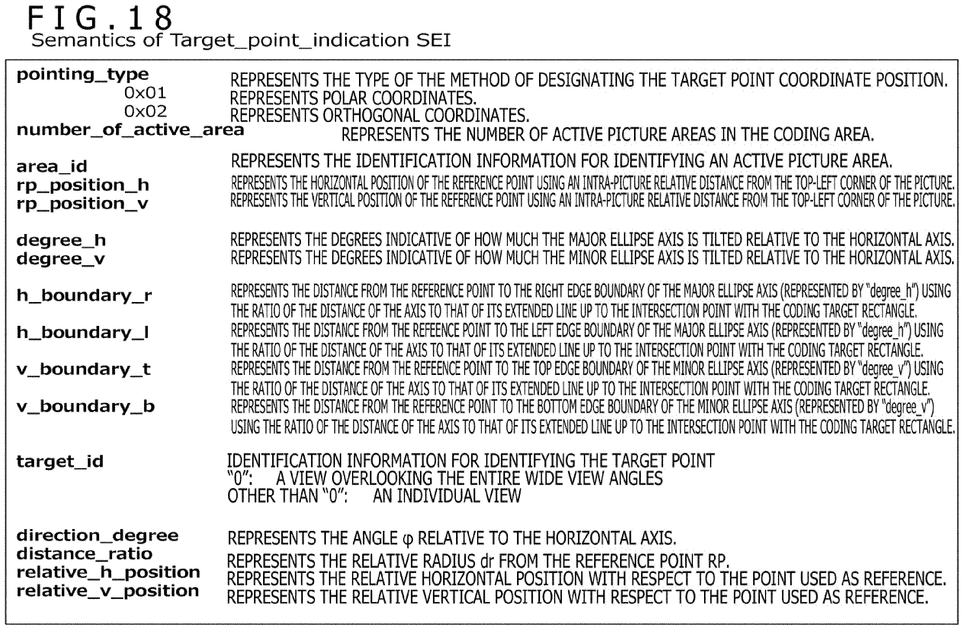

   FIG. 18 is a tabular diagram depicting details of essential information regarding the structural example of the target point indication SEI message.
[FIG. 19]

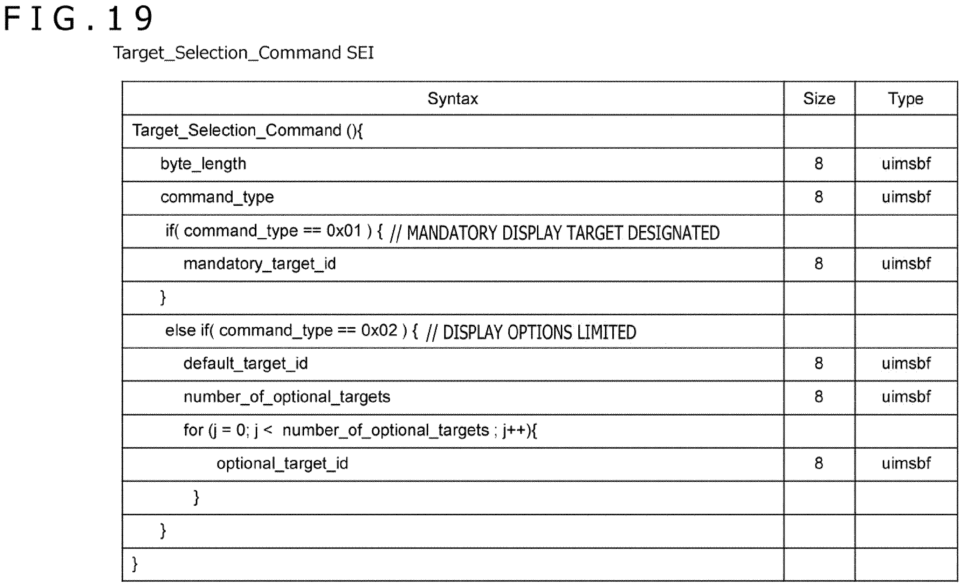

   FIG. 19 is a tabular diagram depicting a structural example of a target selection command SEI message.
[FIG. 20]

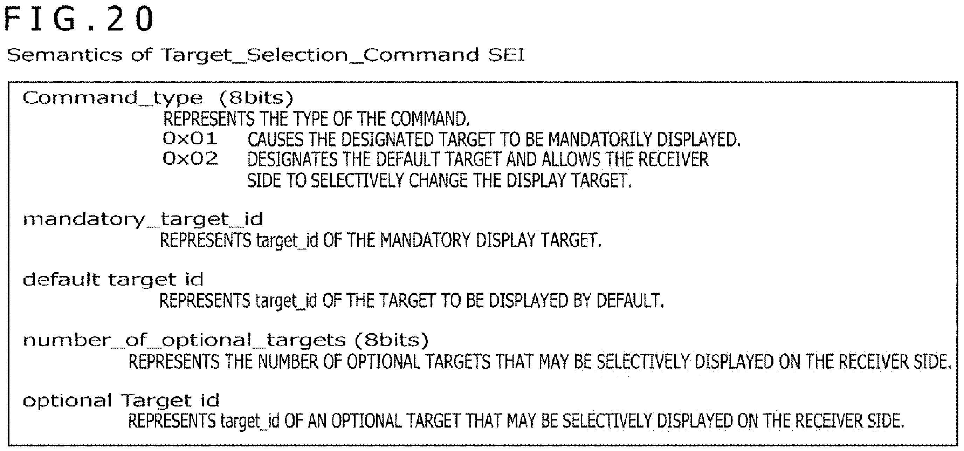

   FIG. 20 is a tabular diagram depicting details of essential information regarding the structural example of the target selection command SEI message.
[FIG. 21]

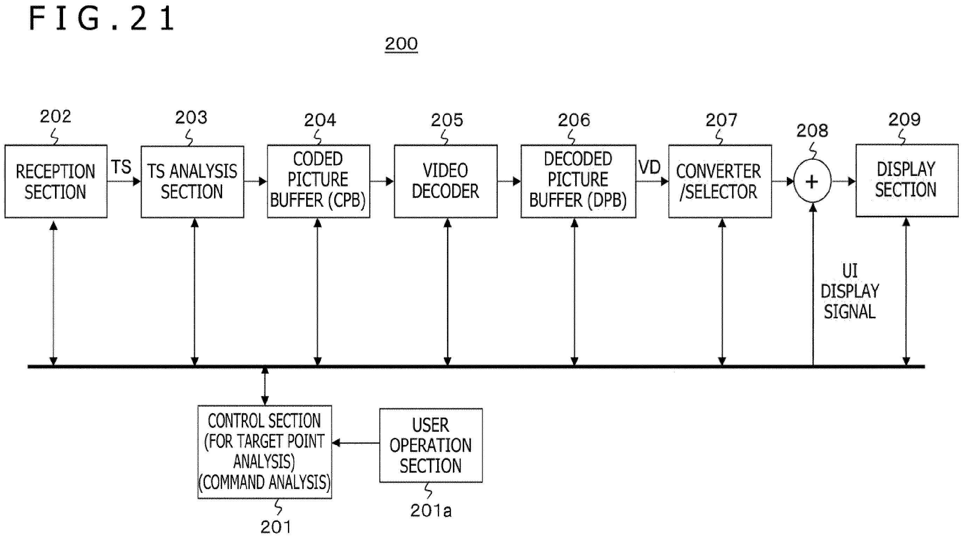

   FIG. 21 is a block diagram depicting a typical configuration of a reception apparatus.
[FIG. 22]

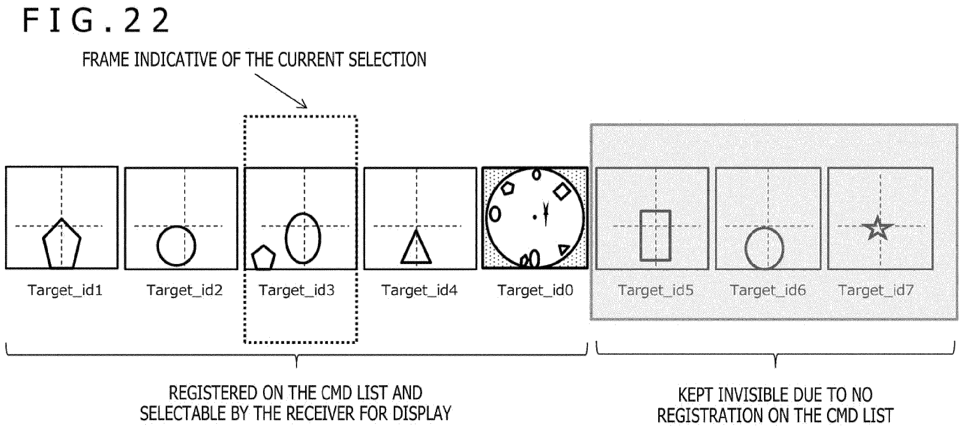

   FIG. 22 is a schematic diagram depicting a typical UI screen.

### [Description of Embodiments]

The embodiments for implementing the present technology (referred to as the embodiments) are described below. The description is given under the following headings:
1. Embodiments
2. Alternative Examples

### 1. Embodiments

### Transmission/Reception System

FIG. 1 depicts a typical configuration of a transmission/reception system 10 as one embodiment of the present technology. The transmission/reception system 10 includes a transmission apparatus 100 and a reception apparatus 200.

The transmission apparatus 100 transmits on a broadcast wave a transport stream TS serving as a container. The transport stream TS includes a video stream obtained by coding the video data of a wide view angle picture such as an omnidirectional picture. Information regarding a command for controlling the display area in the wide view angle picture is inserted into this video stream.

The command information is inserted either in a manner corresponding to the coded data of all pictures or in a manner corresponding to the coded data of only the leading picture of a GOP (Group Of Picture). For example, the command information designates a particular area in the wide view angle picture as the display area. In another example, the command information causes multiple areas in the wide view angle picture to be presented as candidates for selection of the display area.

With this embodiment, information regarding target points set in the wide view angle picture is also inserted into the video stream. The command information controls selection of the target point that determines the display area. For example, the target point information includes information regarding a relative ellipse radius drawn from a reference point set in an elliptical active picture area (including a circle) in the rectangular area of the wide view angle picture and regarding an angle of the radius with respect to a horizontal axis. In another example, the target point information sets the rectangular area of the wide view angle picture as the active picture area, and includes information regarding a two-dimensional relative position with respect to a point used as reference in the rectangular area.

The reception apparatus 200 receives the above-mentioned transport stream TS transmitted on a broadcast wave from the transmission apparatus 100. As described above, the transport stream TS includes the video stream obtained by coding the video data of the wide view angle picture. The information regarding the command for controlling the display area in the wide view angle picture is inserted into this video stream.

The reception apparatus 200 obtains display picture data by processing the video data of the wide view angle picture acquired by decoding the video stream on the basis of the information regarding the command for controlling the display area in the wide view angle picture. In the case where the command causes multiple areas in the wide view angle picture to be presented as candidates for selection of the display area, the reception apparatus 200 displays a user interface screen for allowing one of the multiple areas to be selected, and obtains the display picture data of the area selected on the basis of the user interface screen. It is thus easy for the user to select the display area.

### Configuration of Transmission Apparatus

FIG. 2 depicts a typical configuration of the transmission apparatus 100. The transmission apparatus 100 includes a control section 101, a user operation section 101a, a display section 101b, a wide view angle camera 102, a decoded picture buffer (dpb) 103, a video encoder 104, a coded picture buffer (cpb) 105, a TS formatter 106, and a transmission section 107.

The control section 101 has a CPU (Central Processing Unit) that controls the components of the transmission apparatus 100 in operation. The control section 101 is connected with the user operation section 101a and display section 101b constituting a user interface. The user operation section 101a enables the user to perform various input operations. For example, the user operation section 101a allows the user to perform operations to set target points in the wide view angle picture displayed on the display section 101b. In another example, the user operation section 101a allows the user to carry out operations to set a command for controlling the display area in the wide view angle picture, i.e., the command for selecting the target point that determines the display area in this case.

The wide view angle camera 102 obtains video data VD of the wide view angle picture such as an omnidirectional picture by capturing a target object. As described above, when target points are to be set in the wide view angle picture, the video data VD of the wide view angle picture obtained by the wide view angle camera 102 is sent to the display section 101b via the control section 101 causing the display section 101b to display the wide view angle picture. The video encoder 104 receives input of the video data VD of the wide view angle picture through the decoded picture buffer 103, and codes the input video data VD by AVC or by HEVC, for example, to obtain a video stream.

The video encoder 104 inserts into the video stream the information regarding the target points set by the user operating the user operation section 101a as described above. The number of target points here is at least 1. The video encoder 104 also inserts into the video stream the information regarding an elliptical active picture area in the rectangular area of the wide view angle picture as well as the information regarding a reference point (RP) set in the elliptical active picture area. The video encoder 104 inserts these items of information either in a manner corresponding to the coded data of all pictures or in a manner corresponding to the coded data of only the leading picture of a GOP.

Each of these items of information is explained below. The information regarding the reference point (RP) is first explained with reference to FIG. 3. The reference point (RP), set in an elliptical active picture area in the rectangular area of the wide view angle picture, represents the position used as reference such as the center of the ellipse. In FIG. 3, the elliptical active picture area exists in the rectangular area of the wide view angle picture, with the reference point (RP) set in the active picture area. The position of the reference point (RP) is designated by the ratios of the horizontal and vertical distances of the point from the top left corner of the rectangle used as the point of origin with respect to the horizontal and vertical sizes of the entire rectangle being 1 each (rh%, rv%).

Incidentally, representing positions as a series of relative positions offers the advantage of permitting accurate position designation independent of the resolution of video, as long as the positions are accurately predetermined. In the case where the resolution of video is identified beforehand, all positions may alternatively be represented using pixel counts in place of the relative positions.

The information regarding the elliptical active picture area is explained next with reference to FIG. 4. In this case, an outer shape position of the ellipse (including a circle) within an outer rectangle is defined as follows: A line segment drawn from the reference point (RP) to a particular position on the rectangle is represented by an angle θ relative to the horizontal axis. The ratio of the length of the line segment from the reference point (RP) to the intersection point with the circle or ellipse with respect to the entire line segment is then expressed as a percentage of the angle θ. For example, a line segment OP in FIG. 4 is drawn from the horizontal axis in a direction of the angle θ. If the length of the line segment OP is assumed to be 1, then, a line segment OQ is expressed as a ratio r.

The ellipse such as one indicated in FIG. 4 is represented as a trajectory passing through four points A to D, each of which is expressed by an angle and a percentage (θ, r). The elliptical active picture area is then obtained as follows:
A: (0, OA/OS)
B: (90, 1 (OB/OT = 1))
C: (180, OC/OU)
D: (270, 1 (OD/OW = 1))

Incidentally, the angles OA, OB, OC, and OD need not be necessarily 90 degrees apart. These are elements that may each be designated as an angle relative to the horizontal axis as desired.

Next, the information regarding target points (TP) is explained. Type 1 information is first described with reference to FIG. 5. In the case of the type 1 information, a target point (TP) is represented by a relative ellipse radius dr from the reference point (RP) set in the elliptical active picture area in the rectangular area of the wide view angle picture and by an angle ϕ relative to the horizontal axis (TP (ϕ, dr)). Here, the angle ϕ is represented in counterclockwise degrees relative to the horizontal line angle of 0 at the reference point (RP). The relative radius dr is represented as the ratio relative to the distance (equivalent to radius) of 1 up to the end point of the active picture area at the angle ϕ.

Type 2 information is explained next with reference to FIG. 6. In the case of the type 2 information, the rectangular area of the wide view angle picture is set as the active picture area, and the target point (TP) is represented by a two-dimensional relative position counted from a point of reference in the rectangular area with respect to the entire rectangle being regarded as 1. Using the type 2 information is an effective method where the active picture area is not contained in the elliptical range.

In the case where the point used as reference is the top left corner of the rectangular area, the target point (TP) is given as (tx, ty). Where the point used as reference coincides with the reference point (RP) being RP (rh, rv), the target point (TP) is given as (tx - rh, ty - rv). In this case, the target point (TP) positioned horizontally to the right of the point of reference takes on a positive value, and the TP positioned horizontally to the left of the point of reference takes on a negative value. The target point (TP) positioned vertically under the point of reference takes on a positive value, and the TP positioned vertically above the point of reference takes on a negative value.

FIG. 7 depicts an example of target points (TP) being set in the wide view angle picture. This is an example where each target point (TP) is designated by the relative ellipse radius dr drawn from the reference point (RP) and by the angle ϕ relative to the horizontal axis. Target points TP1 to TP6 have the same relative ellipse radius dr being dr1 drawn from the reference point (RP). Unlike the target points TP1 to TP6, a target point TP7 has a relative ellipse radius dr being dr2 drawn from the reference point (RP).

Subfigure (a) in FIG. 8 depicts a picture obtained by panoramically expanding the wide view angle picture illustrated in FIG. 7. Subfigure (b) in FIG. 8 indicates the positions of the target points TP1 to TP7 in the panoramically expanded picture. Each of the target points is identified by a target ID. As depicted in Subfigure (c) in FIG. 8, by selecting a desired target point from those identified by their target IDs, the receiving side can select the area corresponding to the desired target point as the display area for picture display.

In this case, the display is performed in such a manner that the selected target point is at the center of the display. After the display, the user may perform operations to shift the display area as desired. Although Subfigure (c) in FIG. 8 indicates that all target points are selectable on the receiving side, this embodiment controls the selection of target points on the receiving side using the information regarding the command inserted into the video stream.

In the above examples, only one elliptical active picture area exits in the rectangular area of the wide view angle picture. However, there are cases where multiple elliptical active picture areas exist in the rectangular area of the wide view angle picture. In such cases, the information regarding the reference point (RP), elliptical active picture areas, and target points (TP) may still be considered as applicable as in the above examples.

FIG. 9 depicts an example where there are two elliptical active picture areas in the rectangular area of the wide view angle picture. In this example, target points (TP) are designated by type 1 information. The reference point (RP) is set in each of the elliptical active picture areas. The position of each reference point (RP) is designated by the ratios of the horizontal and vertical distances of the point from the top left corner of the rectangle as the point of origin with respect to the horizontal and vertical sizes of the entire rectangle being regarded as 1 each. In the illustrated example, the position of the reference point (RP1) set in the elliptical active picture area on the left is designated by (rh1%, rv1%), and the position of the reference point (RP2) set in the elliptical active picture area on the right is designated by (rh2%, rv2%).

Although not described here in detail, each elliptical active picture area is defined by four points on a trajectory in terms of their angles and percentages as in the above examples. Each target point (TP) found in the rectangular area of the wide view angle picture is represented by the relative ellipse radius dr drawn from the reference point (RP) set in the active picture area of the ellipse to which the TP belongs, and by the angle ϕ relative to the horizontal axis. In the illustrated example, the target point (TP1) is represented by a relative ellipse radius dr1 drawn from the reference point (RP1) set in the elliptical active picture area on the left and by an angle ϕ1 relative to the horizontal axis. The target point (TP2) is represented by a relative ellipse radius dr2 drawn from the reference point (RP2) set in the elliptical active picture area on the right and by an angle ϕ2 relative to the horizontal axis.

FIG. 10 depicts an example where there are two elliptical active picture areas in the rectangular area of the wide view angle picture and where target points (TP) are designated by type 2 information. The reference point (RP) is set in each of the elliptical active picture areas. The position of each reference point (RP) is designated by the ratios of the horizontal and vertical distances of the point from the top left corner of the rectangle as the point of origin with respect to the horizontal and vertical sizes of the entire rectangle being regarded as 1 each. In the illustrated example, the position of the reference point (RP1) set in the elliptical active picture area on the left is designated by (rh1%, rv1%), and the position of the reference point (RP2) set in the elliptical active picture area on the right is designated by (rh2%, rv2%).

Although not described here in detail, each elliptical active picture area is defined by four points on a trajectory in terms of their angles and percentages, as in the above examples. The rectangular area of the wide view angle picture is set as the active picture area, and each target point (TP) is represented by a two-dimensional relative position counted from the point of reference in the rectangular area with respect to the entire rectangle being regarded as 1.

In the illustrated example, where the point used as reference is the top left corner of the rectangular area, the target point (TP1) is represented by (tx1, ty1) and the target point (TP2) by (tx2, ty2). Where the point used as reference coincides with the reference point (RP), the target point (TP1) is considered to belong to the elliptical active picture area on the left and represented by (tx1 - rh1, ty1 - rv1), and the target point (TP2) is considered to belong to the elliptical active picture area on the right and represented by (tx2 - rh2, ty2 - rv2). In this case, the target point (TP) positioned horizontally to the right of the point used as reference takes on a positive value. The target point (TP) positioned horizontally to the left of the point of reference takes on a negative value. The target point (TP) positioned vertically under the point of reference takes on a positive value. The target point (TP) positioned vertically above the point of reference takes on a negative value.

FIG. 11 depicts an example of target points (TP) being set in the wide view angle picture. This is an example in which target points (TP) are each represented by a two-dimensional relative position counted from the point of reference in the rectangular area of the wide view angle picture with respect to the entire rectangle being regarded as 1. A target point TP11 is set in an elliptical active picture area on the left. Also, target points TP12 and TP13 are set in an elliptical active picture area on the right.

Subfigure (a) in FIG. 12 depicts a picture obtained by panoramically expanding the wide view angle picture illustrated in FIG. 11. Subfigure (b) in FIG. 12 indicates the positions of the target points TP11 to TP13 in the panoramically expanded picture. Each target point is identified by a target ID. As depicted in Subfigure (c) in FIG. 12, by selecting a desired target point from those identified by their target IDs, the receiving side can select the area corresponding to the desired target point as the display area for picture display.

In this case, the display is performed in such a manner that the selected target point is at the center of the display. After the display, the user may perform operations to shift the display area as desired. Although Subfigure (c) in FIG. 12 indicates that all target points are selectable on the receiving side, this embodiment controls the selection of target points on the receiving side using the information regarding the command inserted into the video stream.

The video encoder 104 inserts into the video stream the information regarding the command set by the user operating the user operation section 101a as described above. FIG. 13 depicts an example of the command (CMD). This command, of which the command type is "0×01," designates a specific area in the wide view angle picture as the display area. In the illustrated example, a partial area corresponding to the target point with the target ID (Target_id) = "4" in the wide view angle picture is designated as the display area. This example corresponds to the example of the target points (TP) being set in FIG. 7.

In response to the command, the receiving side performs command analysis to extract a picture of the specific area designated from in a planar picture (i.e., panoramically expanded picture) converted from the wide view angle picture for display. In the illustrated example, a picture of the partial area corresponding to the target point with the target ID (Target_id) = "4" in the wide view angle picture is displayed.

FIG. 14 depicts another example of the command (CMD). This command, of which the command type is "0×02," causes multiple areas in the wide view angle picture to be presented as candidates for selection of the display area. With this embodiment, one of the multiple areas is designated as a default display area.

In the illustrated example, partial areas corresponding to the target points with the target IDs (Target_id) = "3," "1," "2," and "4" in the wide view angle picture, as well as the entire area of the wide view angle picture indicated by the target ID = "0," are presented as candidates for selection of the display area. Of these areas, the partial area corresponding to the target point identified by the target ID = "3" is designated as the default display area. In this case, the areas corresponding to the target points with the IDs = "1," "2," "4" and "0" are presented as optional areas. This example corresponds to the example of the target points (TP) being set in FIG. 7.

In response to the command, the receiving side performs command analysis to extract the picture of either the wide view angle picture or the selected area designated from the planar picture (panoramically expanded picture) converted from the wide view angle picture for display. In this case, the picture of the area designated as the default display area is first displayed. In the illustrated example, the picture of the partial area corresponding to the target point identified by the target ID = "3" in the wide view angle picture is first displayed. Thereafter, the picture display may be switched to the area selected by the user's operation.

Returning to FIG. 2, the video encoder 104 specifically inserts, into a part "SEIs" of an access unit (AU), two messages: a target point indication SEI message (Target_point_indication SEI message) newly defined to include meta information such as information regarding the reference point (RP), elliptical active picture area, and target points (TP); and a target selection command SEI message (Target _Selection _Command SEI message) newly defined to include information regarding a command. The video encoder 104 inserts these SEI messages either into all access units or into only the leading access unit of a GOP.

FIG. 15 depicts the leading access unit of a GOP (Group Of Pictures) applicable where the encoding method is HEVC. In the case of the HEVC encoding method, an SEI message group "Prefix_SEIs" for decoding use is disposed before "slices" of the unit in which picture data is coded, and an SEI message group "Suffix_SEIs" for display use is disposed after the slices. The target point indication SEI message and the target selection command SEI message are disposed as an SEI message group "Suffix_SEIs," for example.

FIGS. 16 and 17 depict a structural example (syntax) of the target point indication SEI message. FIG. 18 depicts details of essential information (semantics) regarding the structural example of the target point indication SEI message. An eight-bit field "byte_length" represents the size of the information subsequent to the SEI message using the number of bytes.

An eight-bit field "pointing_type" represents the type of the method of designating the target point coordinate position. For example, a type "0×01" represents polar coordinates (type 1), and a type "0×02" designates orthogonal coordinates (type 2). An eight-bit field "number_of_active_area" represents the number of elliptical active picture areas in a coding area (i.e., the rectangular area of the wide view angle picture). The subsequent fields are repeated as many times as the number designated in this field.

An eight-bit field "area_id" represents the identification information for identifying an elliptical active picture area. A 16-bit field "rp_position_h" represents the horizontal position of the reference point (RP) using an intra-picture relative distance from the top left corner of the picture. A 16-bit field "rp_position_v" represents the vertical position of the reference point (RP) using an intra-picture relative distance from the top left corner of the picture. A 16-bit field "degree_h" represents the degrees indicative of how much the major ellipse axis is tilted relative to the horizontal axis. A 16-bit field "degree_v" represents the degrees indicative of how much the minor ellipse axis is tilted relative to the horizontal axis.

A 16-bit field "h_boundary_r" represents the distance from the reference point (RP) to the right edge boundary of the major ellipse axis (represented by "degree_h") using the ratio of the distance of the axis to that of its extended line up to the intersection point with a coding target rectangle. A 16-bit field "h_boundary_1" represents the distance from the reference point (RP) to the left edge boundary of the major ellipse axis (represented by "degree_h") using the ratio of the distance of the axis to that of its extended line up to the intersection point with the coding target rectangle.

A 16-bit field "v_boundary_t" represents the distance from the reference point (RP) to the top edge boundary of the minor ellipse axis (represented by "degree_v") using the ratio of the distance of the axis to that of its extended line up to the intersection point with the coding target rectangle. A 16-bit field "v_boundary_b" represents the distance from the reference point (RP) to the bottom edge boundary of the minor ellipse axis (represented by "degree_v") using the ratio of the distance of the axis to that of its extended line up to the intersection point with the coding target rectangle.

When "pointing_type" is "0×01,"the following fields exist: An eight-bit field "target_id" represents the identification information for identifying a target point. For example, "0" represents a view overlooking the entire wide view angles. Anything other than "0" represents an individual view. A 16-bit field "direction_degree" represents the angle ϕ relative to the horizontal axis. A 16-bit field "distance_ratio" represents the relative radius dr from the reference point (PR).

When "pointing_type" is "0×01,"the following fields exist: An eight-bit field "target_id" represents the identification information for identifying a target point. For example, "0" represents a view overlooking the entire wide view angles. Anything other than "0" represents an individual view. A 16-bit field "relative_h_position" represents the relative horizontal position with respect to the point used as reference. A 16-bit field "relative_v_position" represents the relative vertical position with respect to the point used as reference.

FIG. 19 depicts a structural example (Syntax) of the target selection command SEI message. FIG. 20 depicts details of essential information (Semantics) regarding the structural example of the target selection command SEI message. An eight-bit field "byte_length" represents the size of the information subsequent to the SEI message using the number of bytes.

An eight-bit field "command_type" represents the type of the command. A type "0×01" represents the command that causes the designated target to be mandatorily displayed, i.e., the command that designates a specific area in the wide view angle picture as the display area. A type "0×02" represents the command that designates a default target and allows the receiver side to selectively change the display target, i.e., the command that causes multiple areas in the wide view angle picture to be presented as candidates for selection of the display area and one of the multiple areas to be presented as the default display area.

When "command_type" is "0×01,"an eight-bit field "mandatory_target_id" exists. This field represents the target ID (target_id) of the mandatory display target.

When "command_type" is "0×02," an eight-bit field "default_target_id" exists. This field represents the target ID (target_id) of the target to be displayed by default. In this case, there also exists an eight-bit field "number_of_optional_targets." This field represents the number of optional targets that may be selectively displayed on the receiver side. An eight-bit field "optional_target_id" is then repeated as many times as the number of the selectable optional targets. Each of these fields represents the target ID (target_id) of an optional target that may be selectively displayed on the receiver side.

Returning to FIG. 2, the coded picture buffer (cpb) 105 temporarily stores the video stream generated by the video encoder 104. The TS formatter 106 reads the video stream stored in the coded picture buffer 104, converts the video stream into PES packets, converts the PES packets into transport packets, and multiplexes the packets into a transport stream TS to form a multiplexed stream. The transmission section 107 transmits the transport stream TS obtained by the TS formatter 106 to the reception apparatus 200 on a broadcast wave or in packets over networks.

The workings of the transmission apparatus 100 depicted in FIG. 2 are briefly explained below. The video data VD of the wide view angle picture obtained by the wide view angle camera 102 is supplied to the video encoder 103 via the decoded picture buffer (dpb) 103. The video encoder 104 encodes the video data VD by AVC or by HEVC to obtain a video stream (coded stream).

Also, the video encoder 104 inserts into the video stream the information regarding the target points set by the user's operations in the wide view angle picture, information regarding the elliptical active picture area in the rectangular area of the wide view angle picture, and information regarding the reference point (RP) set in the elliptical active picture area. The video encoder 104 further inserts into the video stream the information regarding the command set by the user's operations to control the selection of the target area on the receiver side. These items of information are inserted either in a manner corresponding to the coded data of all pictures or in a manner corresponding to the coded data of only the leading picture in a GOP.

Specifically, the video encoder 104 inserts into the part "SEIs" of the access unit (AU) the following messages: the target point indication SEI message newly defined to include meta information such as the information regarding the elliptical active picture area and target points (TP), and the target selection command SEI message newly defined to include the command information (see FIGS. 15, 16, 17 and 19).

The video stream generated by the video encoder 104 is temporarily stored in the coded picture buffer (cpb) 105. The TS formatter 106 reads the coded stream stored in the coded picture buffer 105, converts the coded stream into PES packets, converts the PES packets into transport packets, and multiplexes the packets into a transport stream TS to form a multiplexed stream.

The transport stream TS obtained by the TS formatter 106 is sent to the transmission section 107. The transmission section 107 transmits the transport stream TS obtained by the TS formatter 106 to the reception apparatus 200 on a broadcast wave or in packets over networks.

### Configuration of Reception Apparatus

FIG. 21 depicts a typical configuration of the reception apparatus 200. The reception apparatus 200 includes a control section (Central Processing Unit) 201, a user operation section 201a, a reception section 202, a TS analysis section 203, a coded picture buffer (cpb) 204, a video decoder 205, a decoded picture buffer (dpb) 206, a converter/selector 207, a combination section 208, and a display section 209.

The control section 201 includes a CPU (Central Processing Unit) that controls the components of the reception apparatus 200 in operation. The control section 201 is connected with the user operation section 201a constituting a user interface. The user may perform various input operations on the user operation section 201a. For example, in the case where it is possible for the receiver side to selectively display the target area, the display picture can be selectively changed by designating the target ID through the user operation section 201a.

The reception section 202 receives the transport stream TS transmitted from the transmission apparatus 100 on a broadcast wave or in packets over networks. The TS analysis section 203 extracts from the transport stream TS the video stream constituted by the video data VD of the wide view angle picture, and sends the extracted video stream to the coded picture buffer (cpb) 204.

The video decoder 205 reads and decodes the coded picture data of each picture stored in the coded picture buffer 204 at a decode timing supplied by a DTS (Decoding Time stamp) of the picture. The decoded picture data of each picture is temporarily stored into the decoded picture buffer 206. From the decoded picture buffer 206, the picture data of each picture is read at a timing supplied by a PTS (Presentation Time Stamp) of the picture. This provides the video data VD of the wide view angle picture, the video data VD being sent to the converter/selector 207.

Also, the video decoder 205 extracts a parameter set and the SEI messages inserted in the video stream, and sends the extracted information to the control section 201. The extracted information includes the target point indication SEI message (see FIGS. 16 and 17) and the target selection command SEI message (see FIG. 19) inserted in all access units or only in the leading access unit of a GOP, as described above.

Here, the target point indication SEI message includes meta information such as the information regarding the target points (TP) set in the wide view angle picture, information regarding the elliptical active picture area in the rectangular area of the wide view angle picture, and information regarding the reference point (RP) set in the elliptical active picture area, as described above. The target selection command SEI message includes the information regarding the command for controlling the selection of target points on the receiving side, as discussed above. The control section 201 recognizes these items of information with respect to all access units or only the leading access unit in a GOP.

The converter/selector 207 obtains a panoramically expanded picture by performing picture processing for panoramic expansion on the video data VD of the wide view angle picture obtained by the decoded picture buffer 206. The picture processing for panoramic expansion is carried out on the basis of the information regarding the elliptical active picture area in the rectangular area of the wide view angle picture and the information regarding the reference point (RP) set in the elliptical area for example, the information being supplied from the control section 201.

In the case where the command type is "0×02" allowing the receiver side to selectively display the target (see FIGS. 14 and 19), the converter/selector 207 generates data of thumbnails indicating content of pictures of the default target and optional target areas on the basis of the information from the control section 201 regarding the target ID of each target area that can be selected as the display area. The converter/selector 207 sends the generated data of these thumbnails to the control section 201.

In the case where the command type is "0×02" allowing the receiver side to selectively display the target, the control section 201 generates a UI display signal for displaying the thumbnails indicating content of different areas in association with the target IDs on the basis of the thumbnail data sent from the converter/selector 207.

FIG. 22 depicts a typical UI screen. This example corresponds to the example of target points (TP) being set in FIG. 7 as well as to the example of the command being set in FIG. 14. In the example of the command settings in FIG. 14, the target area with the target ID = "3" is registered as the default display area, and the target areas with the IDs = "1," "2," "4" and "0" are registered as optional areas. These target areas are displayed as selectable areas on the UI screen. On the basis of this UI screen, the user may operate the user operation section 201a to change the target area. In FIG. 22, the frame indicative of the current selection initially points to the default target area. With the user performing operations to change the target area, this frame is shifted accordingly to point to the selected target area.

On the other hand, the target areas with the IDs = "5," "6" and "7" are not registered as the default area or as the optional areas. Thus these target areas are not displayed as selectable areas on the UI screen.

The control section 201 sends the information designating the target ID to the converter/selector 207. At this point, when the command type is "0×01" with the target area for mandatory display designated, the target ID information regarding the target area is sent to the converter/selector 207. On the other hand, when the command type is "0×02" allowing the receiver side to selectively display the target area, the target ID information regarding the selected target area (initially the default target area) is sent to the converter/selector 207.

The converter/selector 207 generates the display picture data of the target area corresponding to the target ID information sent from the control section 201. For example, in the case where the designated target ID is "0," the converter/selector 207 performs, as needed, processes such as pixel position conversion and resolution conversion on the picture data of the wide view angle picture in order to generate the display picture data for displaying the wide view angle picture. In another example, where the designated target ID is other than "0," the converter/selector 207 converts the wide view angle picture into a panoramic picture and selectively extracts therefrom the picture data for displaying the picture of the partial area corresponding to the target point designated by the target ID in order to generate the display picture data.

The combination section 208 combines the display video signal generated by the converter/selector 207 and the UI display signal generated by the control section 201 and sends the combined signals to the display section 209. The display section 209 includes an LCD (liquid crystal display) or an organic EL (Electro-Luminescence) panel, for example. Alternatively, the display section 209 may be an external device connected to the reception apparatus 200.

In the state where the control section 201 does not generate the UI display signal, the display section 209 displays the picture of the display video signal generated by the converter/selector 207. In the state where the control section 201 generates the UI display signal, the display section 209 displays either a UI screen based on the UI display signal or the picture of the display video signal superimposed with the UI screen of the UI display signal.

In the state where the converter/selector 207 selectively extracts from the panoramic picture the picture data for displaying the picture of the partial area corresponding to the target point designated by the target ID and where the display section 209 displays the picture of the partial area, it is possible to scroll the display picture up, down, right, or left by operation of the user operation section 201a. In this case, the converter/selector 207 successively changes the area extracted from the panoramic picture in accordance with the user's operations.

The workings of the reception apparatus 200 depicted in FIG. 21 are briefly explained below. The reception section 202 receives the transport stream TS transmitted from the transmission apparatus 100 on a broadcast wave or in packets over networks. The transport stream TS is supplied to the TS analysis section 203. The TS analysis section 203 extracts from the transport stream TS a video stream of the video data VD representing the wide view angle picture, and sends the extracted video stream to the coded picture buffer 204.

The video decoder 205 reads and decodes the coded picture data of each picture stored in the coded picture buffer 204 at the decode timing supplied by the DTS (Decoding Time stamp) of the picture. The decoded picture data of each picture is temporarily stored into the decoded picture buffer 206. From the decoded picture buffer 206, the picture data of each picture is read at the timing supplied by the PTS (Presentation Time Stamp) of the picture. This provides the video data VD of the wide view angle picture, the video data VD being sent to the converter/selector 207.

Also, the video decoder 205 extracts a parameter set and the SEI messages inserted in the video stream, and sends the extracted information to the control section 201. The extracted information includes the target point indication SEI message and the target selection command SEI message. The control section 201 recognizes, with respect to all access units or to only the leading access unit in a GOP, the information regarding the target points (TP) set in the wide viewing angle picture, the information regarding the elliptical active picture area in the rectangular area of the wide view angle picture, the information regarding the reference point (RP) set in the elliptical active picture area, and the information regarding the command for controlling the selection of target points on the receiving side.

The converter/selector 207 obtains a panoramic picture by performing picture processing for panoramic expansion on the video data VD of the wide view angle picture.

Also, in the case where the command type is "0×02" allowing the receiver side to selectively display the target (see FIGS. 14 and 19), the converter/selector 207 generates data of thumbnails indicating content of the default target and optional target areas on the basis of the information from the control section 201 regarding the target ID of each target area that can be selected as the display area. The converter/selector 207 sends the generated data of these thumbnails to the control section 201.

In the case where the command type is "0×02" allowing the receiver side to selectively display the target, the control section 201 generates a UI display signal for displaying the thumbnails indicating content of different areas in association with the target IDs on the basis of the thumbnail data sent from the converter/selector 207. The UI display signal is supplied to the display section 209 via the combination section 208. This causes the display section 209 to display the UI screen (see FIG. 22). Presented with the UI screen, the user can selectively change the target area as the display area by designating the target ID through the user operation section 201a.

The control section 201 sends the information designating the target ID to the converter/selector 207. In this case, when the command type is "0×01" designating the target area for mandatory display, the information regarding the target ID is sent to the converter/selector 207. On the other hand, when the command type is "0×02" allowing the receiver side to selectively display the target area, the information regarding the target ID identifying the selected target area (initially the default target area) is sent to the converter/selector 207.

The converter/selector 207 generates the display picture data of the target area corresponding to the target ID information sent from the control section 201. For example, in the case where the target ID is "0," the converter/selector 207 performs, as needed, processes such as pixel position conversion and resolution conversion on the picture data of the wide view angle picture in order to generate the display picture data for displaying the wide view angle picture. In another example, where the target ID is other than "0," the converter/selector 207 selectively extracts from the panoramic picture the picture data for displaying the picture of the partial area corresponding to the target point designated by the target ID in order to generate the display picture data.

The display picture data generated by the converter/selector 207 is supplied to the display section 209 via the combination section 208. This causes the display section 209 to display the picture based on the display picture data (i.e., wide view angle picture, or a picture of the partial area corresponding to the target point in the wide view angle picture). In the state where this picture is displayed and where the command type is "0×02" allowing the receiver side to selectively display the target area, the display section 209 is caused to display the UI screen (see FIG. 22). On the basis of the UI screen, the display area is selectively changed by designating a different target ID through the user operation section 201a.

In the state where the picture of the partial area corresponding to the target point in the wide angle view picture is displayed, the display picture is scrolled up, down, right, or left by operation of the user operation section 201a. In this case, the converter/selector 207 successively changes the area extracted from the panoramic picture in accordance with the user's operations.

In the transmission/reception system 10 in FIG. 1, as explained above, the transmission apparatus 100 transmits the video stream which is obtained by coding the video data of the wide view angle picture and into which is inserted the information regarding the command for controlling the display area in the wide view angle picture. This makes it possible for the transmitting side to control the display area in the wide view angle picture on the receiving side.

Also in the transmission/reception system 10 in FIG. 1, when the command type is "0×02" allowing the receiver side to selectively display the target area, the reception apparatus 200 displays a UI screen that associates the target IDs with the thumbnails of pictures of the selectable target areas, one of which is selected by the user as the target area serving as the display area. It is thus easy for the user to selectively change the display area.

### 2. Alternative Examples

Although the above embodiment has been described as the transmission/reception system 10 including the transmission apparatus 100 and the reception apparatus 200, this is not limitative of transmission/reception systems to which the present technology may be applied. For example, the reception apparatus 200 may be replaced with a set-top box and a monitor interconnected via a digital interface such as the HDMI (High-Definition Multimedia Interface). It is to be noted that "HDMI" is a registered trademark.

It has been also explained using examples that the container for the above embodiment is the transport stream (MPEG-2 TS). However, the present technology may also be applied to systems configured for distribution to reception terminals using networks such as the Internet. In many cases of Internet-based distribution, data is distributed using containers in ISOBMFF (or MP4) or in other formats. That is, the containers applicable to the present technology are diverse, including transport streams (MPEG-2 TS) adopted in digital broadcast standards and containers in various formats including ISOBMFF (or MP4) used for Internet distribution.

The principal characteristic of the present technology is that the information regarding the command controlling the display area in the wide angle view picture is transmitted in a manner inserted into the video stream obtained by coding the video data of the wide view angle picture. This enables the transmitting side to control the display area in the wide view angle picture on the receiving side (see FIGS. 13, 14 and 15). Reference Signs List

### [Reference Signs List]

10 ... Transmission/reception system, 100 ... Transmission apparatus, 101 ... Control section, 101a ... User operation section, 101b ... Display section, 102 ... Wide view angle camera, 103 ... Decoded picture buffer, 104 ... Video encoder, 105 ... Coded picture buffer, 106 ... TS formatter, 107 ... Transmission section, 200 ... Reception apparatus, 201 ... Control section, 201a ... User operation section, 202 ... Reception section, 203 ... TS analysis section, 204 ... Coded picture buffer, 205 ... Video decoder, 206 ... Decoded picture buffer, 207 ... Converter/selector, 208 ... Combination section, 209 ... Display section

## Claims

1. A transmission apparatus comprising:
a transmission section configured to transmit a container in a predetermined format including a video stream obtained by coding video data of a wide view angle picture; and
an information insertion section configured to insert a first SEI message including information regarding a command for controlling a display area in the wide view angle picture into the video stream,
wherein the information insertion section is further configured to insert a separate second SEI message including information regarding a target point set in the wide view angle picture into the video stream,
wherein the information regarding the target point includes information regarding a relative ellipse radius drawn from a reference point set in an elliptical active picture area in a rectangular area of the wide view angle picture and regarding an angle of the radius with respect to a horizontal axis, and
wherein the command controls selection of the target point that determines the display area.

2. The transmission apparatus according to claim 1, wherein the command designates a specific area in the wide view angle picture as the display area.

3. The transmission apparatus according to claim 1, wherein the command causes a plurality of areas in the wide view angle picture to be presented as candidates for selection of the display area.

4. The transmission apparatus according to claim 3, wherein one of the plurality of areas in the wide view angle picture is designated as a default display area.

5. The transmission apparatus according to claim 1, wherein the information insertion section is configured to insert the information regarding the command either in coded data of all pictures or coded data of only a leading picture of a group of pictures.

6. A transmission method comprising the steps of:
causing a transmission section to transmit a container in a predetermined format including a video stream obtained by coding video data of a wide view angle picture;
causing an information insertion section to insert a first SEI message including information regarding a command for controlling a display area in the wide view angle picture into the video stream; and
causing the information insertion section to further insert a separate second SEI message including information regarding a target point set in the wide view angle picture into the video stream,
wherein the information regarding the target point includes information regarding a relative ellipse radius drawn from a reference point set in an elliptical active picture area in a rectangular area of the wide view angle picture and regarding an angle of the radius with respect to a horizontal axis, and
wherein the command controls selection of the target point that determines the display area.

7. A reception apparatus comprising:
a reception section configured to receive a container in a predetermined format including a video stream obtained by coding video data of a wide view angle picture,
wherein a first SEI message including information regarding a command for controlling a display area in the wide view angle picture is inserted in the video stream,
wherein a separate second SEI message including information regarding a target point set in the wide view angle picture is inserted in the video stream, and
wherein the information regarding the target point includes information regarding a relative ellipse radius drawn from a reference point set in an elliptical active picture area in a rectangular area of the wide view angle picture and regarding an angle of the radius with respect to a horizontal axis; and
the reception apparatus further comprising:
a processing section configured to process the video data of the wide view angle picture obtained by decoding the video stream on a basis of the information regarding the command so as to obtain display picture data, wherein the command controls selection of the target point that determines the display area.

8. The reception apparatus according to claim 7, wherein the command causes a plurality of areas in the wide view angle picture to be presented as candidates for selection of the display area,
the reception apparatus further comprising:
a display control section configured to display a user interface screen for selecting any one of the plurality of areas,
wherein the processing section obtains the display picture data of the area selected on a basis of the user interface screen.

9. A reception method comprising the steps of:
causing a reception section to receive a container in a predetermined format including a video stream obtained by coding video data of a wide view angle picture,
wherein a first SEI message including information regarding a command for controlling a display area in the wide view angle picture is inserted into the video stream,
wherein a separate second SEI message including information regarding a target point set in the wide view angle picture is inserted in the video stream, and
wherein the information regarding the target point includes information regarding a relative ellipse radius drawn from a reference point set in an elliptical active picture area in a rectangular area of the wide view angle picture and regarding an angle of the radius with respect to a horizontal axis; and
causing a processing section to process the video data of the wide view angle picture obtained by decoding the video stream on a basis of the information regarding the command so as to obtain display picture data, wherein the command controls selection of the target point that determines the display area.

## Patentansprüche

1. Sendevorrichtung, die Folgendes umfasst:
einen Sendeabschnitt, der dazu ausgebildet ist, einen Container in einem vorbestimmten Format zu übertragen, das einen Videostream aufweist, der durch Codierung von Videodaten eines Weitwinkelbildes erhalten wird; und
einen Informationseinfügungsabschnitt, der dazu ausgebildet ist, eine erste SEI-Meldung einschließlich Informationen bezüglich eines Befehls zum Steuern eines Anzeigebereichs im Weitwinkelbild in den Videostream einzufügen,
wobei der Informationseinfügungsabschnitt ferner dazu ausgebildet ist, eine separate zweite SEI-Meldung einschließlich Informationen bezüglich eines in dem Weitwinkelbild eingestellten Zielpunktes in den Videostream einzufügen,
wobei die Information bezüglich des Zielpunktes eine Information bezüglich eines relativen Ellipsenradius aufweist, der von einem in einem elliptischen aktiven Bildbereich in einem rechteckigen Bereich des Weitwinkelbildes gesetzten Bezugspunkt und bezüglich eines Winkels des Radius in Bezug auf eine horizontale Achse gezogen wird, und
wobei der Befehl die Auswahl des Zielpunktes steuert, der den Anzeigebereich bestimmt.

2. Sendevorrichtung gemäß Anspruch 1, wobei der Befehl einen spezifischen Bereich im Weitwinkelbild als Anzeigebereich bezeichnet.

3. Sendevorrichtung gemäß Anspruch 1, wobei der Befehl bewirkt, dass eine Vielzahl von Bereichen im Weitwinkelbild als Kandidaten für die Auswahl des Anzeigebereichs präsentiert werden.

4. Sendevorrichtung gemäß Anspruch 3, wobei einer der Vielzahl von Bereichen im Weitwinkelbild als Standardanzeigebereich bezeichnet wird.

5. Sendevorrichtung gemäß Anspruch 1, wobei der Informationseinfügungsabschnitt dazu ausgebildet ist, die Information bezüglich des Befehls entweder in codierte Daten aller Bilder oder in codierte Daten nur eines führenden Bildes einer Gruppe von Bildern einzufügen.

6. Sendeverfahren, das die folgenden Schritte umfasst:
Veranlassen eines Sendeabschnitts, einen Container in einem vorbestimmten Format zu übertragen, das einen Videostream aufweist, der durch Codierung von Videodaten eines Weitwinkelbildes erhalten wird;
Veranlassen eines Informationseinfügungsabschnitts, eine erste SEI-Meldung einschließlich Informationen bezüglich eines Befehls zum Steuern eines Anzeigebereichs im Weitwinkelbild in den Videostream einzufügen; und
Veranlassen des Informationseinfügungsabschnitts, ferner eine separate zweite SEI-Meldung einschließlich Informationen bezüglich eines in dem Weitwinkelbild eingestellten Zielpunktes in den Videostream einzufügen, wobei die Information bezüglich des Zielpunktes eine Information bezüglich eines relativen Ellipsenradius aufweist, der von einem in einem elliptischen aktiven Bildbereich in einem rechteckigen Bereich des Weitwinkelbildes gesetzten Bezugspunkt und bezüglich eines Winkels des Radius in Bezug auf eine horizontale Achse gezogen wird, und
wobei der Befehl die Auswahl des Zielpunktes steuert, der den Anzeigebereich bestimmt.

7. Empfangsvorrichtung, die Folgendes umfasst:
einen Empfangsabschnitt, der dazu ausgebildet ist, einen Container in einem vorbestimmten Format zu empfangen, das einen Videostream aufweist, der durch Codierung von Videodaten eines Weitwinkelbildes erhalten wird;
wobei eine erste SEI-Meldung einschließlich Informationen bezüglich eines Befehls zum Steuern eines Anzeigebereichs im Weitwinkelbild in den Videostream eingefügt wird,
wobei eine separate zweite SEI-Meldung einschließlich Informationen bezüglich eines in dem Weitwinkelbild eingestellten Zielpunktes in den Videostream eingefügt wird, und
wobei die Information bezüglich des Zielpunktes eine Information bezüglich eines relativen Ellipsenradius aufweist, der von einem in einem elliptischen aktiven Bildbereich in einem rechteckigen Bereich des Weitwinkelbildes gesetzten Bezugspunkt und bezüglich eines Winkels des Radius in Bezug auf eine horizontale Achse gezogen wird; und
die Empfangsvorrichtung ferner Folgendes umfasst:
einen Verarbeitungsabschnitt, der dazu ausgebildet ist, die Videodaten des Weitwinkelbildes, die durch Decodieren des Videostreams erhalten werden, auf der Basis der Information bezüglich des Befehls zu verarbeiten, um Anzeigebilddaten zu erhalten, wobei der Befehl die Auswahl des Zielpunktes steuert, der den Anzeigebereich bestimmt.

8. Empfangsvorrichtung gemäß Anspruch 7, wobei der Befehl bewirkt, dass eine Vielzahl von Bereichen im Weitwinkelbild als Kandidaten für die Auswahl des Anzeigebereichs präsentiert werden,
wobei die Empfangsvorrichtung ferner Folgendes umfasst:
einen Anzeige-Steuerabschnitt, der dazu ausgebildet ist, einen Benutzeroberflächenbildschirm zum Auswählen eines beliebigen Bereichs aus der Vielzahl von Bereichen anzuzeigen,
wobei der Verarbeitungsabschnitt die Anzeigebilddaten des auf der Basis des Benutzeroberflächenbildschirms ausgewählten Bereichs erhält.

9. Empfangsverfahren, das die folgenden Schritte umfasst:
Veranlassen eines Empfangsabschnitts, einen Container in einem vorbestimmten Format zu empfangen, das einen Videostream aufweist, der durch Codierung von Videodaten eines Weitwinkelbildes erhalten wird,
wobei eine erste SEI-Meldung einschließlich Informationen bezüglich eines Befehls zum Steuern eines Anzeigebereichs im Weitwinkelbild in den Videostream eingefügt wird,
wobei eine separate zweite SEI-Meldung einschließlich Informationen bezüglich eines in dem Weitwinkelbild eingestellten Zielpunktes in den Videostream eingefügt wird, und
wobei die Information bezüglich des Zielpunktes eine Information bezüglich eines relativen Ellipsenradius aufweist, der von einem in einem elliptischen aktiven Bildbereich in einem rechteckigen Bereich des Weitwinkelbildes gesetzten Bezugspunkt und bezüglich eines Winkels des Radius in Bezug auf eine horizontale Achse gezogen wird; und
Veranlassen eines Verarbeitungsabschnitts, die Videodaten des Weitwinkelbildes, die durch Decodieren des Videostreams erhalten werden, auf einer Basis der Information bezüglich des Befehls zu verarbeiten, um Anzeigebilddaten zu erhalten, wobei der Befehl die Auswahl des Zielpunktes steuert, der den Anzeigebereich bestimmt.

## Revendications

1. Appareil d'émission, comprenant :
une section d'émission, configurée pour émettre un contenant dans un format prédéterminé qui inclut un flux vidéo obtenu en codant des données vidéo d'une image à grand angle de vision ; et
une section d'insertion d'information, configurée pour insérer dans le flux vidéo un premier message SEI qui inclut une information concernant une commande de contrôle d'une zone d'affichage dans l'image à grand angle de vision,
la section d'insertion d'information étant en outre configurée pour insérer dans le flux vidéo un second message SEI distinct qui inclut une information concernant un point cible défini dans l'image à grand angle de vision,
l'information concernant le point cible incluant une information concernant un rayon d'ellipse relatif tracé à partir d'un point de référence défini dans une zone d'image active elliptique dans une zone rectangulaire de l'image à grand angle de vision et concernant un angle du rayon par rapport à un axe horizontal, et
la commande contrôlant une sélection du point cible qui détermine la zone d'affichage.

2. Appareil d'émission selon la revendication 1, dans lequel la commande désigne comme zone d'affichage une zone spécifique dans l'image à grand angle de vision.

3. Appareil d'émission selon la revendication 1, dans lequel la commande amène une pluralité de zones dans l'image à grand angle de vision à être présentées comme candidates pour une sélection de la zone d'affichage.

4. Appareil d'émission selon la revendication 3, dans lequel une zone d'affichage de la pluralité de zones d'affichage dans l'image à grand angle de vision est désignée comme zone d'affichage par défaut.

5. Appareil d'émission selon la revendication 1, dans lequel la section d'insertion d'information est configurée pour insérer l'information concernant la commande dans des données codées de toutes les images ou bien dans des données codées d'une première image seulement d'un groupe d'images.

6. Procédé d'émission, comprenant les étapes consistant à :
amener une section d'émission à émettre un contenant dans un format prédéterminé qui inclut un flux vidéo obtenu en codant des données vidéo d'une image à grand angle de vision ;
amener une section d'insertion d'information à insérer dans le flux vidéo un premier message SEI qui inclut une information concernant une commande de contrôle d'une zone d'affichage dans l'image à grand angle de vision ; et
amener la section d'insertion d'information à insérer en outre dans le flux vidéo un second message SEI distinct qui inclut une information concernant un point cible défini dans l'image à grand angle de vision,
l'information concernant le point cible incluant une information concernant un rayon d'ellipse relatif tracé à partir d'un point de référence défini dans une zone d'image active elliptique dans une zone rectangulaire de l'image à grand angle de vision et concernant un angle du rayon par rapport à un axe horizontal, et
la commande contrôlant une sélection du point cible qui détermine la zone d'affichage.

7. Appareil de réception, comprenant :
une section de réception, configurée pour recevoir un contenant dans un format prédéterminé qui inclut un flux vidéo obtenu en codant des données vidéo d'une image à grand angle de vision,
un premier message SEI qui inclut une information concernant une commande de contrôle d'une zone d'affichage dans l'image à grand angle de vision étant inséré dans le flux vidéo,
un second message SEI distinct qui inclut une information concernant un point cible défini dans l'image à grand angle de vision étant inséré dans le flux vidéo, et
l'information concernant le point cible incluant une information concernant un rayon d'ellipse relatif tracé à partir d'un point de référence défini dans une zone d'image active elliptique dans une zone rectangulaire de l'image à grand angle de vision et concernant un angle du rayon par rapport à un axe horizontal ; et
l'appareil de réception comprenant en outre :
une section de traitement, configurée pour traiter les données vidéo de l'image à grande angle de vision, obtenues en décodant le flux vidéo sur la base de l'information concernant la commande de façon à obtenir des données d'image d'affichage, la commande contrôlant une sélection du point cible qui détermine la zone d'affichage.

8. Appareil de réception selon la revendication 7, dans lequel la commande amène une pluralité de zones dans l'image à grand angle de vision à être présentées comme candidates pour une sélection de la zone d'affichage,
l'appareil de réception comprenant en outre :
une section de contrôle d'affichage, configurée pour afficher un écran d'interface d'utilisateur pour sélectionner une zone quelconque de la pluralité de zones,
la section de traitement obtenant les données d'image d'affichage de la zone sélectionnée sur la base de l'écran d'interface d'utilisateur.

9. Procédé de réception, comprenant les étapes consistant à :
amener une section de réception à recevoir un contenant dans un format prédéterminé qui inclut un flux vidéo obtenu en codant des données vidéo d'une image à grand angle de vision,
un premier message SEI qui inclut une information concernant une commande de contrôle d'une zone d'affichage dans l'image à grand angle de vision étant inséré dans le flux vidéo,
un second message SEI distinct qui inclut une information concernant un point cible défini dans l'image à grand angle de vision étant inséré dans le flux vidéo, et
l'information concernant le point cible incluant une information concernant un rayon d'ellipse relatif tracé à partir d'un point de référence défini dans une zone d'image active elliptique dans une zone rectangulaire de l'image à grand angle de vision et concernant un angle du rayon par rapport à un axe horizontal ; et
amener une section de traitement à traiter les données vidéo de l'image à grand angle de vision, obtenues en décodant le flux vidéo sur la base de l'information concernant la commande de façon à obtenir des données d'image d'affichage, la commande contrôlant une sélection du point cible qui détermine la zone d'affichage.
